# EUROPEAN PATENT APPLICATION

(11) **EP 4 794 008 A1**
(43) Date of publication of application: **19.08.2026**
(21) Application number: 25218783.6
(22) Date of filing: 26.11.2025
(51) Int. Cl.: H01M 4/131, H01M 4/136, H01M 10/0562, H01M 10/0525

(54) **SOLID-STATE BATTERY**

(30) Priority: 12.02.2025 JP 2025020422
(71) Applicant: Toyota Jidosha Kabushiki Kaisha, Toyota-shi, Aichi-ken 471-8571 (JP)
(72) Inventor: NAKANISHI, Azusa, TOYOTA-SHI, AICHI-KEN, 471-8571 (JP); MIZUNO, Fuminori, TOYOTA-SHI, AICHI-KEN, 471-8571 (JP); SHIOTANI, Shinya, TOYOTA-SHI, AICHI-KEN, 471-8571 (JP)
(74) Representative: Cabinet Beau de Loménie

(57) **Abstract**

A solid-state battery includes a cathode layer, a solid electrolyte layer, and an anode layer. At least one of the cathode layer and the anode layer includes at least one of a first sulfide solid electrolyte containing a Li element, a P element, a S element, and carbonate ions and a composite sulfide solid electrolyte of a second sulfide solid electrolyte containing a Li element, a P element, and a S element and a carbonate.

## Description

### 1. Field of the Invention

The present disclosure relates to a solid-state battery.

### 2. Description of Related Art

Various technologies have been proposed regarding batteries such as those disclosed in Japanese Unexamined Patent Application Publication Nos. 2018-080095 (JP 2018-080095 A), 2021-132023 (JP 2021-132023 A), and 2011-165650 (JP 2011-165650 A).

### SUMMARY OF THE INVENTION

JP 2018-080095 A discloses a method for producing a sulfide solid electrolyte. Batteries using sulfide solid electrolytes have room for improvement in terms of temperature characteristics and suppression of thermal chain reaction.

The present disclosure has been made in view of the above circumstances, and has a main object to provide a solid-state battery in which thermal stability can be improved.

The present disclosure includes the following aspects.
<1>
   A solid-state battery including a cathode layer, a solid electrolyte layer, and an anode layer, in which
   at least one of the cathode layer and the anode layer includes at least one of a first sulfide solid electrolyte containing a Li element, a P element, a S element, and carbonate ions and a composite sulfide solid electrolyte of a second sulfide solid electrolyte containing a Li element, a P element, and a S element and a carbonate.
<2>
   The solid-state battery according to <1>, in which the anode layer includes at least one of the first sulfide solid electrolyte and the composite sulfide solid electrolyte.
<3>
   The solid-state battery according to <1> or <2>, in which the cathode layer includes an oxide active material and at least one of the first sulfide solid electrolyte and the composite sulfide solid electrolyte.
<4>
   The solid-state battery according to any one of <1> to <3>, in which at least one of the cathode layer and the anode layer includes an active material containing an oxygen element.
<5>
   The solid-state battery according to any one of <1> to <4>, in which:
   the anode layer includes at least one of the first sulfide solid electrolyte and the composite sulfide solid electrolyte; and
   the cathode layer includes an oxide active material and at least one of the first sulfide solid electrolyte and the composite sulfide solid electrolyte.

According to the present disclosure, it is possible to provide the solid-state battery in which thermal stability can be improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

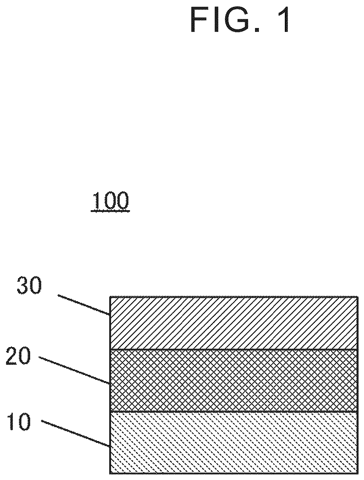

FIG. 1 is a schematic sectional view showing an example of a solid-state battery of the present disclosure.

### DETAILED DESCRIPTION OF EMBODIMENTS

An embodiment according to the present disclosure will now be described. It should be noted that matters not specifically mentioned in the present specification but necessary to carry out the present disclosure (for example, general configurations and production processes of a solid-state battery that are not characteristic of the present disclosure) may be understood as design matters for those skilled in the art based on conventional techniques in the art. The present disclosure may be carried out based on the content disclosed in the present specification and the common general technical knowledge in the art.

The dimensional relationships (such as length, width, and thickness) shown in the drawings do not reflect the actual dimensional relationships.

In the present disclosure, an example of a method for calculating an average particle size of particles is as follows. First, the particle size of a certain particle is calculated in a transmission electron microscope (hereinafter referred to as TEM) image or a scanning electron microscope (hereinafter referred to as SEM) image at an appropriate magnification (for example, 50,000x to 1,000,000x) when the particle is considered to be spherical. The particle size calculation based on such TEM or SEM observation is carried out for 200 to 300 particles of the same type, and the average of these particles is defined as the average particle size.

The present disclosure provides a solid-state battery including a cathode layer, a solid electrolyte layer, and an anode layer.

At least one of the cathode layer and the anode layer includes at least one of a first sulfide solid electrolyte containing a Li element, a P element, a S element, and carbonate ions and a composite sulfide solid electrolyte of a second sulfide solid electrolyte containing a Li element, a P element, and a S element and a carbonate.

According to the present disclosure, at least one of the cathode layer and the anode layer includes the sulfide solid electrolyte substituted with carbonate ions or the carbonate. Therefore, the ignition temperature is shifted to a higher temperature, and thermal stability is improved.

According to the present disclosure, at least one of the cathode layer and the anode layer that include an active material containing an oxygen element includes the sulfide solid electrolyte substituted with carbonate ions or the carbonate. Therefore, CO₂ is generated during abnormal heating. Thus, a fire-extinguishing function is provided and the thermal stability is improved.

The solid-state battery of the present disclosure includes the cathode layer, the solid electrolyte layer, and the anode layer, and may include an anode including the anode layer and a cathode including the cathode layer.

In the solid-state battery of the present disclosure, at least one of the cathode layer and the anode layer includes at least one of the first sulfide solid electrolyte containing the Li element, the P element, the S element, and the carbonate ions and the composite sulfide solid electrolyte of the second sulfide solid electrolyte containing the Li element, the P element, and the S element and the carbonate. Both the cathode layer and the anode layer may include at least one of the first sulfide solid electrolyte and the composite sulfide solid electrolyte. Both the cathode layer and the anode layer may include the first sulfide solid electrolyte.

At least one of the cathode layer and the anode layer may include the active material containing the oxygen element. When both the cathode layer and the anode layer include the active material containing the oxygen element, the active material containing the oxygen element in the cathode layer and the active material containing the oxygen element in the anode layer may be different types of active material to cause a potential difference.

The first sulfide solid electrolyte contains the Li element, the P element, the S element, and the carbonate ions. In the first sulfide solid electrolyte, part of the S element in the sulfide solid electrolyte may be substituted with the carbonate ions (CO₃²⁻).

The first sulfide solid electrolyte is obtained, for example, by amorphizing a raw material composition containing Li₂S, Li₂CO₃, and P₂S₅ by mechanical milling etc. to synthesize sulfide glass, and then heating the sulfide glass at a temperature equal to or higher than the crystallization temperature to form a glass ceramic.

The proportion of Li₂CO₃ to the total of Li₂S and Li₂CO₃ may be, for example, 5 mol% or more and 70 mol% or less.

The composite sulfide solid electrolyte includes the second sulfide solid electrolyte and the carbonate. The proportion of the carbonate in the composite sulfide solid electrolyte is not particularly limited, but may be, for example, 1 mass% to 70 mass%.

The second sulfide solid electrolyte contains the Li element, the P element, and the S element.

The first sulfide solid electrolyte and the second sulfide solid electrolyte are collectively referred to as "sulfide solid electrolyte."

The carbonate may be Na₂CO₃, Li₂CO₃, K₂CO₃, NaHCO₃, LiHCO₃, KHCO₃, etc.

The sulfide solid electrolyte is an electrolyte containing the Li element, the P element, and the S element. The sulfide solid electrolyte may further contain an M element (M is at least one of As, Sb, Si, Ge, Sn, B, Al, Ga, and In). The sulfide solid electrolyte may also contain a halogen element such as F, Cl, Br, or I.

The sulfide solid electrolyte may be a sulfide glass (amorphous) solid electrolyte, a sulfide glass ceramic solid electrolyte, or a crystalline sulfide solid electrolyte. The sulfide solid electrolyte may have a crystalline phase. Examples of the crystalline phase include a thio-LISICON crystalline phase, an argyrodite crystalline phase, and an LGPS crystalline phase.

The composition of the sulfide solid electrolyte is not particularly limited, but examples thereof include xLi₂S·(1 - x)P₂S₅ (0.5 ≤ x < 1) and yLiI·zLiBr·(100 - y - z)(xLi₂S·(1 - x)P₂S₅) (0.5 ≤ x < 1, 0 ≤ y ≤ 30, 0 ≤ z ≤ 30). In these compositions, x may satisfy 0.7 ≤ x ≤ 0.8. Another example of the composition of the sulfide solid electrolyte is Li₇₋ₓPS₆₋ₓXₓ. X is at least one of F, Cl, Br, and I, and x satisfies 0 ≤ x < 2. Another example of the composition of the sulfide solid electrolyte is Li₄₋ₓMe₁₋ₓPₓS₄ (0 < x < 1). Me is at least one of Al, Zn, In, Ge, Si, Sn, Sb, Ga, and Bi. Examples of the sulfide solid electrolyte include LiI-LiBr-Li₂S-P₂S₅, LiI-Li₂S-P₂S₅, LiI-Li₂S-P₂O₅, and LiI-Li₃PO₄-P₂S₅.

The sulfide solid electrolyte may be in the form of particles from the standpoint of ease of handling.

The average particle size of the particles of the sulfide solid electrolyte is not particularly limited, but may be 1 nm to 100 µm.

FIG. 1 is a schematic sectional view showing an example of the solid-state battery of the present disclosure.

As shown in FIG. 1, a solid-state battery 100 of the present disclosure includes an anode layer 10, a solid electrolyte layer 20, and a cathode layer 30 in this order.

### Cathode

The cathode includes a cathode layer, and may further include a cathode current collector.

The cathode layer is a layer containing at least a cathode active material. If necessary, the cathode layer may contain at least one of the first sulfide solid electrolyte and the composite sulfide solid electrolyte as a solid electrolyte, and at least one of a conductive material and a binder.

The cathode layer may be disposed on one surface of the cathode current collector, or may be disposed on both surfaces of the cathode current collector. The cathode may have a multilayer structure in which two or more cathode layers are formed on at least one surface of the cathode current collector. When two or more cathode layers are formed, the cathode layers may contain the same type or different types of cathode active material.

The cathode active material may be an active material containing an oxygen element. Examples of the active material containing the oxygen element include an oxide active material. Examples of the oxide active material include layered rock-salt active materials such as LiCoO₂, LiMnO₂, LiNiO₂, LiVO₂, LiNi_{1/3}Co_{1/3}Mn_{1/3}O₂, and LiNi_{0.8}Mn_{0.1}Co_{0.1}O₂, spinel active materials such as LiMn₂O₄, Li₄Ti₅O₁₂, and Li(Ni_{0.5}Mn_{1.5})O₄, and olivine active materials such as LiFePO₄, LiMnPO₄, LiNiPO₄, and LiCoPO₄.

A coating layer containing a Li-ion conductive compound may be formed on the surface of the cathode active material. This is because the reaction between the cathode active material and a solid electrolyte (in particular, a sulfide solid electrolyte) can be suppressed. Examples of the Li-ion conductive compound include B₂O₃, Li₂B₄O₇, LiBPO₄, Li₃PO₄, LiPO₃, and LiNbO₃. The thickness of the coating layer is, for example, 1 nm or more and 30 nm or less. The coverage of the Li-ion conductive compound that covers the cathode active material is, for example, 70% or more, and may be 90% or more, or 100%.

The cathode active material is generally in the form of particles. The cathode active material may be primary particles, or secondary particles that are an agglomerate of the primary particles.

The average particle size of the cathode active material is not particularly limited, but may be, for example, 0.01 µm or more and 50 µm or less, or 0.5 µm or more and 30 µm or less.

The proportion of the cathode active material in the cathode layer is, for example, 20 mass% or more, and may be 30 mass% or more, or 40 mass% or more. When the proportion of the cathode active material is too small, there is a possibility that a sufficient energy density cannot be obtained. The proportion of the cathode active material in the cathode layer is, for example, 95 mass% or less, or may be 70 mass% or less, or 60 mass% or less. When the proportion of the cathode active material is too large, there is a possibility that the ionic conductivity and electronic conductivity of the cathode layer relatively decrease.

The proportion of the solid electrolyte in the cathode layer may be, for example, 1 mass% or more, 10 mass% or more, or 15 mass% or more. When the proportion of the solid electrolyte is too small, there is a possibility that the ion conduction paths in the cathode layer are insufficient. The proportion of the solid electrolyte in the cathode layer may be, for example, 70 mass% or less, or 50 mass% or less. When the proportion of the solid electrolyte is too large, the proportion of the cathode active material is relatively small. Therefore, there is a possibility that the energy density decreases.

The cathode layer may contain a conductive material. By adding the conductive material, the electronic conductivity of the cathode layer is improved.

Examples of the conductive material include carbon materials, metal particles, and conductive polymers. Examples of the carbon materials include particulate materials such as acetylene black (AB) and Ketjen black (KB), and fibrous materials such as vapor-grown carbon fibers (VGCFs), carbon nanotubes (CNTs), and carbon nanofibers (CNFs).

The proportion of the conductive material in the cathode layer may be, for example, 0.1 mass% or more. When the proportion of the conductive material is too small, there is a possibility that the electron conduction paths in the cathode layer are insufficient. The proportion of the conductive material in the cathode layer may be, for example, 5 mass% or less. When the proportion of the conductive material is too large, the proportion of the cathode active material is relatively small. Therefore, there is a possibility that the energy density decreases.

The cathode layer may contain a binder.

Examples of the binder include styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), styrene-isoprene-styrene block copolymers (SISs), and ethylene-propylene-diene copolymers (EPDMs).

The proportion of the binder in the cathode layer may be, for example, 0.5 mass% or more. When the proportion of the binder is too small, there is a possibility that an increase in resistance due to charging and discharging cannot be reduced sufficiently. The proportion of the binder in the cathode layer may be, for example, 15 mass% or less. When the proportion of the binder is too large, the proportion of the cathode active material is relatively small. Therefore, there is a possibility that the energy density decreases.

The thickness of the cathode layer is, for example, 0.1 µm or more and 1000 µm or less, and may be 1 µm or more and 500 µm or less, or 30 µm or more and 100 µm or less.

The method for producing the cathode layer is not particularly limited, but examples thereof include a method in which a cathode active material, a conductive material, and a solvent are mixed to obtain a cathode slurry, and the cathode slurry is applied to a cathode current collector and dried to form a cathode layer. When forming the cathode layer, pressing may be performed to press the cathode layer in the thickness direction. Examples of the pressing include roller pressing and flat plate pressing.

Examples of the solvent include N-methylpyrrolidone (NMP), tetralin, diisobutyl ketone, butyl butyrate, mesitylene, heptane, dibutyl ether, decane, dodecane, isodecane, and toluene, and the solvent may contain two or more of these components.

Examples of materials for the cathode current collector include SUS, Cr, Au, Pt, Zn, aluminum, copper, nickel, iron, titanium, and carbon. The thickness of the cathode current collector is, for example, 0.1 µm or more and 100 µm or less. The cathode current collector may be in the form of a foil or a plate. The shape of the cathode current collector as viewed in plan is not particularly limited, and examples include circular, elliptical, rectangular, and any polygonal shapes. The cathode current collector may have a structure in which a buffer layer, an elastic layer, or a positive temperature coefficient (PTC) thermistor layer is provided on its surface.

### Anode

The anode includes an anode layer, and further includes an anode current collector if necessary.

The anode layer is a layer containing at least an anode active material. If necessary, the anode layer may contain at least one of the first sulfide solid electrolyte and the composite sulfide solid electrolyte as a solid electrolyte, and at least one of a conductive material and a binder. The anode layer may have a larger area than the cathode layer.

The anode active material may be, for example, in the form of particles or a sheet. The average particle size of the particles of the anode active material may be, for example, 1 µm or more. The average particle size of the anode active material may be, for example, 30 µm or less.

The anode active material may include, for example, at least one selected from the group consisting of a carbon-based active material, a Li-based active material, a Si-based active material, a Si-C composite material, and an oxide active material. The anode active material may be an active material containing an oxygen element.

The carbon-based active material may include, for example, at least one selected from the group consisting of graphite, soft carbon, and hard carbon. "Graphite" is a general term for natural graphite and artificial graphite. The graphite may be a mixture of natural graphite and artificial graphite.

Examples of the Li-based active material include Li, Li silicate, and Li alloys.

Examples of the Si-based active material include Si, SiO, and Si alloys.

The Si-C composite material refers to a composite material of a carbon-based active material (such as graphite) and a Si-based active material (such as Si). For example, fine Si particles may be dispersed within carbon particles. For example, fine Si particles may be dispersed within graphite particles. For example, Li silicate particles may be coated with a carbon material (such as amorphous carbon).

Examples of the oxide active material are similar to the examples of the oxide active material for the cathode active material.

The solid electrolyte, the conductive material, and the binder used in the anode layer may be the same as those described above for the cathode layer.

The proportion of the solid electrolyte in the anode layer may be, for example, 1 mass% or more, 15 mass% or more, or 20 mass% or more. The proportion of the solid electrolyte in the anode layer may be, for example, 70 mass% or less, or 60 mass% or less.

The proportion of the conductive material in the anode layer may be, for example, 0.1 mass% or more and 5 mass% or less.

The proportion of the binder in the anode layer may be, for example, 0.5 mass% or more and 15 mass% or less.

The thickness of the anode layer is, for example, 0.1 µm or more and 1000 µm or less, and may be 1 µm or more and 500 µm or less, or 30 µm or more and 100 µm or less.

Examples of materials for the anode current collector include SUS, aluminum, copper, nickel, iron, titanium, and carbon. The thickness of the anode current collector varies depending on the shape, but may be, for example, within a range of 1 µm to 50 µm. The anode current collector may be in the form of a foil or a plate. The shape of the anode current collector as viewed in plan is not particularly limited, and examples include circular, elliptical, rectangular, and any polygonal shapes. The anode current collector may have a structure in which a buffer layer, an elastic layer, or a PTC thermistor layer is provided on its surface.

### Solid Electrolyte Layer

The solid electrolyte layer is formed between the cathode layer and the anode layer, and contains at least a solid electrolyte.

The solid electrolyte layer contains at least a solid electrolyte, and further contains a binder etc. if necessary. The solid electrolyte may be the sulfide solid electrolyte.

One solid electrolyte may be used alone, or two or more solid electrolytes may be used in combination. When two or more solid electrolytes are used, the two or more solid electrolytes may be mixed, or a multilayer structure composed of two or more layers of the individual solid electrolytes may be formed.

The proportion of the solid electrolyte in the solid electrolyte layer is not particularly limited, but is, for example, 50 mass% or more, and may be 60 mass% or more and 100 mass% or less, 70 mass% or more and 100 mass% or less, or 100 mass%. The solid electrolyte layer may include an electrolyte solution of less than 1 mass% with respect to the total amount of the solid electrolyte layer.

Examples of the binder include the binders that can be contained in the cathode layer described above.

The content of the binder in the solid electrolyte layer may be 0 mass% to 10 mass% with respect to the total amount of the solid electrolyte layer.

The thickness of the solid electrolyte layer is, for example, 0.1 µm or more and 1000 µm or less, and may be 0.1 µm or more and 500 µm or less, or 0.1 µm or more and 100 µm or less.

The battery in the present disclosure may further include a binding jig that applies a binding pressure along a thickness direction to the cathode layer, the solid electrolyte layer, and the anode layer. The binding pressure is, for example, 0.1 MPa or more, and may be 1 MPa or more, or 5 MPa or more. The binding pressure is, for example, 100 MPa or less, and may be 50 MPa or less, or 20 MPa or less.

### Solid-state Battery

The solid-state battery in the present disclosure may be a semi-solid-state battery or an all-solid-state battery. In the present disclosure, the semi-solid-state battery is a battery in which the solid electrolyte layer includes a solid component such as a solid electrolyte and a liquid component (for example, a solvent and an electrolyte solution). In the present disclosure, the all-solid-state battery is a battery in which the solid electrolyte layer includes only a solid component such as a solid electrolyte. The solid-state battery in the present disclosure may be either a primary battery or a secondary battery, but may particularly be a secondary battery. This is because it can be repeatedly charged and discharged and is useful, for example, as an in-vehicle battery.

The shape of the solid-state battery is not particularly limited. For example, the solid-state battery may be a coin battery, a cylindrical battery, a prismatic battery, a sheet battery, a button battery, a flat battery, or a laminated battery.

In the case of a battery stack in which a plurality of solid-state batteries is stacked, the battery stack may be of a monopolar type or a bipolar type.

Examples of applications of the solid-state battery include power supplies for vehicles such as hybrid electric vehicles (HEVs), plug-in hybrid electric vehicles (PHEVs), battery electric vehicles (BEVs), gasoline vehicles, and diesel vehicles. In particular, the solid-state battery may be used as a drive power supply for hybrid electric vehicles (HEVs), plug-in hybrid electric vehicles (PHEVs), or battery electric vehicles (BEVs). The solid-state battery may also be used as a power supply for moving objects other than vehicles (for example, trains, ships, and aircraft), or as a power supply for electrical products such as information processing devices.

The present disclosure is not limited to the above embodiment. The above embodiment is merely illustrative, and any structure having substantially the same configuration as, and having similar functions and effects to, the technical idea described in the claims of the present disclosure is included in the technical scope of the present disclosure.

### Comparative Example 1

### Formation of Cathode Layer

Butyl butyrate, a 5 wt% butyl butyrate solution of a PVDF-based binder, LiNi_{1/3}Co_{1/3}Mn_{1/3}O₂ with an average particle size of 6 µm as a cathode active material, a Li₂S-P₂S₅-based glass ceramic as a sulfide solid electrolyte, and VGCFs as a conductive material were placed in a PP container at a weight ratio of cathode active material / solid electrolyte / conductive material / binder = 82 / 15 / 2 / 1, and the mixture was stirred for 30 seconds using an ultrasonic disperser (UH-50 manufactured by SMT Co., Ltd.).

Next, the container was shaken for 3 minutes using a shaker (TTM-1 manufactured by Sibata Scientific Technology Ltd.), and then stirred for 30 seconds using the ultrasonic disperser.

After shaking for 3 minutes using the shaker, the obtained cathode slurry was applied onto an Al foil (produced by Showa Denko K. K.) by a blade method using an applicator.

The applied cathode slurry was dried on a hot plate at 100°C for 30 minutes. Thus, a cathode including a cathode layer on a cathode current collector was obtained.

### Formation of Anode Layer

Butyl butyrate, a 5 wt% butyl butyrate solution of a PVDF-based binder, VGCFs as a conductive material, clathrate Si as an anode active material, and a Li₂S-P₂S₅-based glass ceramic as a sulfide solid electrolyte were placed in a PP container at a weight ratio of anode active material / solid electrolyte / conductive material / binder = 52 / 44 / 2.5 / 1.5, and the mixture was stirred for 30 seconds using an ultrasonic disperser (UH-50 manufactured by SMT Co., Ltd.).

Next, the container was shaken for 30 minutes using a shaker (TTM-1 manufactured by Sibata Scientific Technology Ltd.). The obtained anode slurry was applied onto a Ni foil by a blade method using an applicator. The applied anode slurry was dried on a hot plate at 100°C for 30 minutes. Thus, an anode including an anode layer on an anode current collector was obtained.

### Formation of Solid Electrolyte Layer

Heptane, a 5 wt% heptane solution of a BR-based binder, and Li₂S-P₂S₅-based glass ceramic as a sulfide solid electrolyte were placed in a PP container, and the mixture was stirred for 30 seconds using an ultrasonic disperser (UH-50 manufactured by SMT Co., Ltd.).

Next, the container was shaken for 30 minutes using a shaker (TTM-1 manufactured by Sibata Scientific Technology Ltd.). The obtained solid electrolyte slurry was applied onto an Al foil by a blade method using an applicator. The applied solid electrolyte slurry was dried on a hot plate at 100°C for 30 minutes. Thus, a solid electrolyte layer was obtained on the Al foil.

### Fabrication of Battery

The cathode layer and a first solid electrolyte layer were laminated in this order. This laminate was set in a roll press and pressed at a pressing pressure of 100 kN/cm and a pressing temperature of 165°C in a first pressing step to obtain a cathode laminate.

The anode layer and a Cu foil as an anode current collector were laminated in this order. This laminate was set in a roll press and pressed at a pressing pressure of 60 kN/cm and a pressing temperature of 25°C in a second pressing step to obtain an anode laminate.

An Al foil as a release sheet, an intermediate solid electrolyte layer formed on the Al foil, a second solid electrolyte layer, an anode layer, and the anode laminate having a Ni foil as an anode current collector were laminated in this order.

This laminate was set in a planar uniaxial press and temporarily pressed at 100 MPa and 25°C for 10 seconds. The Al foil was peeled off from the intermediate solid electrolyte layer of this laminate to obtain an anode laminate on which the intermediate solid electrolyte layer was further laminated.

The anode laminate and the cathode laminate were formed such that the area of the anode laminate was larger than the area of the cathode laminate.

The cathode laminate and the anode laminate on which the intermediate solid electrolyte layer was further laminated were laminated in this order. This laminate was set in a planar uniaxial press and pressed at a pressing pressure of 200 MPa and a pressing temperature of 120°C for 1 minute in a third pressing step. The obtained laminate was sealed to obtain an all-solid-state battery.

The weights of the layers per cell were as follows.

Cathode layer: 15.4 mg, Solid electrolyte layer: 3.6 mg, Anode layer: 24.1 mg

### Example 1

An all-solid-state battery (cell) was fabricated by the same method as in Comparative Example 1 except that the anode layer was formed using a CO₃²⁻ substituted sulfide solid electrolyte as the sulfide solid electrolyte.

The weights of the layers per cell were as follows.

Cathode layer: 15.5 mg, Solid electrolyte layer: 3.6 mg, Anode layer: 24.1 mg

Each of the cells fabricated in Example 1 and Comparative Example 1 was bound at a predetermined binding pressure using a binding jig, and was charged at 1/10C to 4.55 V with a constant current and a constant voltage (CCCV).

### Ignition Test

After the charging, the laminate was taken out as a sample from each of the cells in Example 1 and Comparative Example 1.

A heating test was carried out in dry air with a dew point of -30°C by placing the laminate on a hot plate at 325°C with the cathode surface oriented downward.

The temperature of the lower surface of the laminate was measured. When ignition occurred, the temperature at which the ignition occurred was recorded as an ignition temperature. The results are shown in Table 1.

**Table 1**

| | Ignition temperature |
|---|---|
| Comparative Example 1 | 238°C |
| Example 1 | 281°C or higher* |

As shown in Table 1, when the laminate was heated on the hot plate at 325°C, the ignition temperature was 238°C in Comparative Example 1 and 281°C or higher in Example 1. In Example 1, it was found that the temperature was the maximum temperature of 281°C or higher without ignition. It can be seen that the use of the CO₃²⁻ substituted sulfide solid electrolyte for at least the anode layer increases the ignition temperature and improves the thermal stability of the cell. It is presumed that the use of the CO₃²⁻ substituted sulfide solid electrolyte for the cathode layer will also provide the same effects as in the case where it is used for the anode layer.

### Comparative Example 2

### Production of Cathode Composite

A cathode composite was produced using LiNi_{1/3}Co_{1/3}Mn_{1/3}O₂ with an average particle size of 6 µm as a cathode active material, a Li₂S-P₂S₅-based glass ceramic as a sulfide solid electrolyte, and VGCFs as a conductive material. The cathode composite was obtained by weighing 800 mg of the cathode active material, 200 mg of the solid electrolyte, and 20 mg of the VGCFs and kneading them in a mortar.

### Production of Anode Composite

An anode composite was produced using Si as an anode active material, a Li₂S-P₂S₅-based glass ceramic as a sulfide solid electrolyte, and VGCFs as a conductive material. The anode composite was produced by kneading 450 mg of the anode active material, 450 mg of the solid electrolyte, and 10 mg of the VGCFs in a mortar.

### Fabrication of Pellet Cell

As a solid electrolyte, 70 mg of a Li₂S-P₂S₅-based glass ceramic was placed in an alumina cylinder with Φ11.28 and pressed at 1 ton to form a solid electrolyte layer.

Next, 25 mg of the cathode composite was placed on one side of the solid electrolyte layer and pressed at 1 ton to form a cathode layer pellet. Next, 8.35 mg of the anode composite was placed on the other side and pressed at 6 tons to form an anode layer pellet. A pellet cell (cell) was fabricated by the above method.

The fabricated cell was bound at a predetermined binding pressure, charged at 1/10C to 4.55 V with a constant current and a constant voltage, and then discharged at 1/10C to 4.35 V with a constant current and a constant voltage.

After the charging and discharging, the cell was disassembled, and the cathode layer pellet and the anode layer pellet were collected.

### Example 2

A pellet cell was fabricated by the same method as in Comparative Example 2 except that the cathode composite was produced using a CO₃²⁻ substituted sulfide solid electrolyte as the sulfide solid electrolyte and the anode composite was produced using a CO₃²⁻ substituted sulfide solid electrolyte as the sulfide solid electrolyte. After the charging and discharging, the cell was disassembled, and the cathode layer pellet and the anode layer pellet were collected.

### TPD-MS Analysis

Apparatus: Shimadzu GC/MS QP2010 plus (10)
Heating conditions: temperature increase from room temperature to 500°C (temperature increase rate of 10°C/min)
Atmosphere: He flow (50 mL/min)

Under the above conditions, the collected cathode layer pellets and the collected anode layer pellets were subjected to TPD-MS analysis to evaluate CO₂ generation amounts. The results are shown in Table 2.

**Table 2**

| | | CO₂ generation amount |
|---|---|---|
| | | (wtppm) |
| Comparative Example 2 | Cathode layer | 0.3 |
| | Anode layer | 0.03 |
| Example 2 | Cathode layer | 1.3 |
| | Anode layer | 0.03 |

As shown in Table 2, in an oxygen-rich environment in which the active material containing the oxygen element is used as the cathode active material and oxygen is released from the cathode active material, the results of Example 2 show that CO₂ is generated when the CO₃²⁻ substituted sulfide solid electrolyte is contained in the cathode layer, thereby providing a fire-extinguishing effect.

In the case of the anode layer using Si that does not contain the oxygen element as the anode active material, even if the CO₃²⁻ substituted sulfide solid electrolyte is contained in the anode layer, oxygen is not released and therefore CO₂ is not generated. Thus, the fire-extinguishing function is not exhibited. When the active material containing the oxygen element is used as the anode active material and the CO₃²⁻ substituted sulfide solid electrolyte is contained in the anode layer, it is presumed that CO₂ is generated to provide the fire-extinguishing effect as in the case where the CO₃²⁻ substituted sulfide solid electrolyte is contained in the cathode layer.

The results of Example 1 in Table 1 and the results of Example 2 in Table 2 show that the use of the CO₃²⁻ substituted sulfide solid electrolyte for the anode layer at least increases the ignition temperature of the cell and improves the thermal stability of the cell.

## Claims

1. A solid-state battery (100) comprising a cathode layer (30), a solid electrolyte layer (20), and an anode layer (10), wherein
at least one of the cathode layer (30) and the anode layer (10) includes at least one of a first sulfide solid electrolyte containing a Li element, a P element, a S element, and carbonate ions and a composite sulfide solid electrolyte of a second sulfide solid electrolyte containing a Li element, a P element, and a S element and a carbonate.

2. The solid-state battery (100) according to claim 1, wherein the anode layer (10) includes at least one of the first sulfide solid electrolyte and the composite sulfide solid electrolyte.

3. The solid-state battery (100) according to claim 1 or 2, wherein the cathode layer (30) includes an oxide active material and at least one of the first sulfide solid electrolyte and the composite sulfide solid electrolyte.

4. The solid-state battery (100) according to any one of claims 1 to 3, wherein at least one of the cathode layer (30) and the anode layer (10) includes an active material containing an oxygen element.

5. The solid-state battery (100) according to any one of claims 1 to 4, wherein:
the anode layer (10) includes at least one of the first sulfide solid electrolyte and the composite sulfide solid electrolyte; and
the cathode layer (30) includes an oxide active material and at least one of the first sulfide solid electrolyte and the composite sulfide solid electrolyte.
